(19) **Europäisches Patentamt / European Patent Office / Office européen des brevets**

(11) **EP 3 197 677 B2**

(12) # NEW EUROPEAN PATENT SPECIFICATION
## After opposition procedure

(45) Date of publication and mention
of the opposition decision:
**06.04.2022   Bulletin 2022/14**

(45) Mention of the grant of the patent:
**19.09.2018   Bulletin 2018/38**

(21) Application number: **15772168.9**

(22) Date of filing: **21.09.2015**

(51) International Patent Classification (IPC):
**B32B 27/08** (2006.01)       **B32B 27/32** (2006.01)

(52) Cooperative Patent Classification (CPC):
**B32B 27/32; B32B 3/28; B32B 5/022; B32B 7/02;
B32B 7/12; B32B 25/042; B32B 25/10;
B32B 25/14; B32B 27/08; B32B 27/12;
B32B 27/18;** B32B 2270/00; B32B 2307/51;
B32B 2307/514; B32B 2307/704;       (Cont.)

(86) International application number:
**PCT/US2015/051153**

(87) International publication number:
**WO 2016/048866 (31.03.2016 Gazette 2016/13)**

(54) **POLYOLEFIN-BASED ELASTIC FILM STRUCTURES, LAMINATES AND METHODS THEREOF**

POLYOLEFINBASIERTE ELASTISCHE FOLIENSTRUKTUREN, LAMINATE UND VERFAHREN DAFÜR

STRUCTURES DE FILM ÉLASTIQUE À BASE DE POLYOLÉFINE, STRATIFIÉS ET PROCÉDÉS CORRESPONDANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.09.2014   US 201462055027 P**

(43) Date of publication of application:
**02.08.2017   Bulletin 2017/31**

(73) Proprietor: **Dow Global Technologies LLC
Midland, MI 48674 (US)**

(72) Inventors:
• **WEVERS, Ronald
4533RD Terneuzen (NL)**
• **DEGROOT, Jacquelyn, A.
Freeport, TX 77541 (US)**
• **CHANG, Andy, C.
Houston, TX 77006 (US)**

(74) Representative: **Boult Wade Tennant LLP
Salisbury Square House
8 Salisbury Square
London EC4Y 8AP (GB)**

(56) References cited:
| | |
|---|---|
| EP-A1- 1 244 744 | EP-A1- 2 195 161 |
| EP-A1- 2 586 824 | EP-B1- 2 288 746 |
| WO-A1-2006/093504 | WO-A1-2011/142948 |
| WO-A1-2013/169358 | WO-A1-2013/169358 |
| WO-A2-2004/063270 | WO-A2-2007/146148 |
| US-A1- 2007 092 704 | US-B2- 7 498 282 |
| US-B2- 7 807 593 | |

• **MARIELA DESIMONE et al.: "Subtle Structural
Aspects of Propylene-Based Copolymers as
Revealed by Raman Spectroscopy", Applied
Spectroscopy, vol. 69, no. 12, 2015,**
• **DOW: Versify Plastomers and Elastomers, March
2007 (2007-03), pages 1-3,**
• **Geoffrey Pritchard: "Plastic Additives", 1998
pages 49-54, 148-152,**
• **Anhydrides-Advances in Research and
Application 2013 Edition 2013**

**(Cont. next page)**

(52) Cooperative Patent Classification (CPC): (Cont.)
B32B 2307/746; B32B 2535/00; B32B 2555/00;
B32B 2555/02

**Description**

TECHNICAL FIELD

Embodiments of the present disclosure generally relate to polyolefin-based elastic film structures, laminates, and methods of manufacture, and more specifically relate to polyolefin-based elastic film structures, laminates, and methods of manufacture such items for use in hygiene and medical products.

BACKGROUND

Extensible laminate materials that include films, such as, elastic films, are commonly used for a wide variety of applications. Disposable hygiene products, especially consumer-related products, often have one or more elastic elements that are integral to their use, function, or appeal. Highly elastic elements can be critical to the fit of certain consumer-related products, such as, diapers, training pants and adult incontinence products in the waist, ears, side-panels, and cuff regions. Elastic films, however, are not without their drawbacks. The films can be difficult to handle due to tackiness of the films on the roll, which can cause blocking, i.e., where the film sticks to itself, or causes machinability issues where the film sticks to equipment parts.

There have been various approaches taken to provide highly elastic elements. For example, elastic films or nonwoven webs have been formulated from elastic materials, such as, styrenic block copolymers (SBCs). SBCs can exhibit excellent physical properties, such as, elasticity and flexibility; however, elastic films or nonwoven webs made entirely of SBCs can be costly. Furthermore, certain styrenic block copolymers can have a limited process window as a result of poor thermal stability. For example, styrene-isoprene-styrene (SIS) and styrene-butadienestyrene (SBS) can undergo thermal degradation and consequently suffer from decreased processability, machinability, and reduced mechanical performance. SBCs with hydrogenated midblocks such as styrene-ethylene/butylene-styrene (SEBS), styrene-ethylene/propylene-styrene (SEPS), and other SBCs can exhibit greater thermal stability but suffer due to greater energy intensity, higher $CO_2$ output, and other environmental and economic disadvantages in the course of their manufacture. Though thermally more stable and more environmentally and economically advantaged than some SBCs, polyolefin elastomers can exhibit lower than desired physical properties.

Other approaches for providing highly elastic elements involve laminating an elastomer film to a nonwoven substrate to form a laminate, and then stretching the laminate to activate the non-woven and impart the necessary elasticity. Still other approaches involve coextruding a low crystallinity elastic core material with less elastic, less tacky, or higher crystallinity materials in the skins to reduce blocking and improve the machinabilty and handling of the film. Such films can be stretched to impart the desired elasticity as disclosed in U.S. 7,498,282.

Accordingly, alternative approaches for polyolefin-based elastic film structures, laminates, and methods of manufacture of such items are disclosed herein.

SUMMARY

The present disclosure provides stretch-modified elastomeric multilayer films and processes for manufacturing stretch-modified elastomeric multilayer films as defined in the claims appended hereto.

Disclosed in embodiments herein are stretch-modified elastomeric multilayer films. The films comprise a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 40 percent by weight, and wherein the one or more additional core layer polymers comprise less than 30 wt.% of the core layer, and at least one outer layer independently comprising a second propylene/alpha-olefin copolymer and from 2.5 to 30 wt.% of an antiblock agent, wherein the second propylene/alpha-olefin copolymer comprises greater than 80 wt.% propylene by weight of the whole polymer, has a melt flow rate (230°C/2.16 Kg) from 0.1 g/10 min to 35 g/10 min, and has a crystallinity in the range of from at least 1 percent by weight to 40 percent by weight as measured via differential scanning calorimetry, wherein the second propylene/alpha-olefin copolymer is a propylene/ethylene copolymer and the ethylene content is from 8 to 18 wt.% of the whole polymer, wherein the crystallinity of the first propylene/alpha-olefin copolymer is equal to or greater than the crystallinity of the second propylene/alpha-olefin copolymer. Also disclosed in embodiments herein are laminates comprising the stretch-modified elastomeric multilayer films disclosed herein.

Further disclosed in embodiments herein are processes for manufacturing stretch-modified elastomeric multilayer films. The processes comprise providing a multilayer film comprising a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 40 percent by weight, and wherein the one or more additional core layer polymers comprise less than 30 wt.% of the core layer, and at least one outer layer independently comprising a second propylene/alpha-olefin copolymer and from 2.5 to 30 wt.% of an antiblock agent, wherein the second propylene/alpha-olefin copolymer comprises greater than 80 wt.% propylene by weight of the whole polymer, has a melt flow rate (230°C/2.16 Kg) from 0.1 g/10 min to 35 g/10 min, and has a crystallinity in the range of from at least 1 percent by weight to 30 percent by weight as measured via differential scanning calorimetry, wherein the second propylene/alpha-olefin copolymer is an propylene/ethylene copolymer and the ethylene content is from 8 to 18 wt.% of the whole polymer, wherein the crystallinity of the first propylene/alpha-olefin copolymer is equal to or greater than the crystallinity of the second propylene/alpha-olefin copolymer, performing a first stretch of the film in at least one direction to an elongation of 100% or greater of its original length to form a stretch-modified multilayer film, and substantially relaxing the stretch-modified multilayer film in the at least one direction.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

BRIEF DESCRIPTION OF THE DRAWINGS

FIG. 1 schematically depicts an in-line blown film process that may be used to prepare stretch-modified multilayer films according to one or more embodiments shown and described herein; and

FIG. 2 schematically depicts an in-line cast extrusion film process that may be used to prepare stretch-modified multilayer films according to one or more embodiments shown and described herein.

DETAILED DESCRIPTION

Reference will now be made in detail to embodiments of stretch-modified elastomeric multilayer films, laminates, and methods thereof, examples of which are described and illustrated in the accompanying figures. The stretch-modified elastomeric multilayer films may be used to produce components for absorbent hygiene products (e.g., diaper products, training pants, and adult incontinence products), such as, for example, backsheets, waistbands, cuffs, side panels, and diaper ears. It is noted, however, that this is merely an illustrative implementation of the embodiments disclosed herein. The embodiments are applicable to other technologies that are susceptible to similar problems as those discussed above. For example, stretch-modified elastomeric multilayer films may be used to produce bags, disposable wear, cloth-like wipes, face masks, surgical gowns, tissues, bandages and wound dressings are clearly within the purview of the present embodiments.

As used herein, "stretch-modified" refers to films that undergo at least a first stretch in at least one direction after film formation and prior to subsequent processing steps, such as, lamination or bonding with a substrate or another film. In some embodiments, the films may undergo at least a first stretch in at least one direction to an elongation of 100% or greater of its original length to form a stretch-modified film. In other embodiments, the films may undergo at least a first stretch in at least one direction to an elongation of greater than 100% of its original length to form a stretch-modified film. In further embodiments, films may undergo at least a first stretch in at least one direction to an elongation of 300% or greater, 350% or greater, 400% or greater, 450% or greater, or even 500% or greater of its original length to form a stretch-modified film.

Elongation may be determined as follows:

$$Elongation\ (\%) = \frac{L - L_0}{L_0} \ x \ 100\%$$

wherein $L_0$ is the original length of the specimen or film, and L is the length of the sample at any point during which the specimen or film is stretched.

The stretch-modified elastomeric multilayer films comprise a core layer comprising a first propylene/alpha-olefin copolymer and at least one outer layer. The core layer may be positioned adjacent to the at least one outer layer or alternatively, there may be at least one intervening layer (e.g., inner layer) between the core layer and the at least one outer layer. In some embodiments, the films comprise a core layer and two outer layers, wherein the core layer is positioned between the two outer layers. In other embodiments, an inner layer may be positioned between the core layer and one or both of the two outer layers. In further embodiments, the films comprise a core layer positioned between two outer layers, and two or more inner layers positioned between the core layer and one or both of the two outer layers. Each inner layer may be the same or different than other inner layers present in the films. It should be understood that the stretch-modified elastomeric multilayer films may comprise other combinations of core, outer, and inner layers in accordance with the teachings herein.

In embodiments herein, the thickness ratio of the at least one outer layer to the core layer can be captured by percentages. For example, in some embodiments, the core layer comprises at least about 50%, 60%, 70%, 80%, 90%, or 95% of the overall film thickness. In other embodiments, the core layer comprises from about 50% to about 95% of the overall film thickness. In other embodiments, the core layer comprises from about 60% to about 90% of the overall film thickness. In further embodiments, the core layer comprises from about 70% to about 90% of the overall film thickness. In some embodiments, the at least one outer layer independently comprise from about 2% to about 30%, from about 5% to about 30%, or from about 5% to about 20% of the overall film thickness. In embodiments herein where two or more outer layers are present, each outer layer may have an equal thickness, or alternatively, may have an unequal thickness. In embodiments herein, an inner layer may be present. The inner layer may be positioned between the core layer and the at least one outer layer. In some embodiments, the inner layer may independently comprise from about 2% to about 20%, from about 2% to about 15%, or from about 2% to about 10% of the overall film thickness. In embodiments herein where two or more inner layers are present, each inner layer may have an equal thickness, or alternatively, may have an unequal thickness.

Core Layer

The core layer comprises a first propylene/alpha-olefin copolymer. The propylene/alpha-olefin copolymer comprises units derived from propylene and polymeric units derived from one or more alpha-olefin comonomers. Exemplary comonomers utilized to manufacture the propylene/alpha-olefin copolymer may include C2, and C4 to C10 alpha-olefins; for example, C2, C4, C6 and C8 alpha-olefins.

The propylene/alpha-olefin copolymer comprises from 1 to 40 percent by weight of units derived from one or more alpha-olefin comonomers. All individual values and subranges from 1 to 40 weight percent are included herein and disclosed herein; for example, the weight percent of units derived from one or more alpha-olefin comonomers can be from a lower limit of 1, 3, 4, 4.5, 5, 7, 8, 9, or 11 weight percent to an upper limit of 40, 35, 30, 27, 20, 15, 12, or 9 weight percent. For example, the propylene/alpha-olefin copolymer comprises from 1 to 35 percent by weight of units derived from one or more alpha-olefin comonomers; or in the alternative, the propylene/alpha-olefin copolymer comprises from 1 to 30 percent by weight of units derived from one or more alpha-olefin comonomers; or in the alternative, the propylene/alpha-olefin copolymer comprises from 3 to 27 percent by weight of units derived from one or more alpha-olefin comonomers; or in the alternative, the propylene/alpha-olefin copolymer comprises from 3 to 20 percent by weight of units derived from one or more alpha-olefin comonomers; or in the alternative, the propylene/alpha-olefin copolymer comprises from 3 to 15 percent by weight of units derived from one or more alpha-olefin comonomers; or in the alternative, the propylene/alpha-olefin copolymer comprises from 4.5 to 15 percent by weight of units derived from one or more alpha-olefin comonomers; or in the alternative, the propylene/alpha-olefin copolymer comprises from 8 to 15 percent by weight of units derived from one or more alpha-olefin comonomers; or in the alternative, the propylene/alpha-olefin copolymer comprises from 11 to 15 percent by weight of units derived from one or more alpha-olefin comonomers. In some embodiments, the propylene/alpha-olefin copolymers are further characterized as comprising (A) at least 50 percent, between 60 and less than 100, between 80 and 99, and between 85 and 99, weight percent units derived from propylene, and (B) between greater than zero and 50, between greater than zero and 40, between 1 and 20, between 5 and 20, and between 7 and 20, weight percent units derived from at least one of ethylene and/or a C4-C10 a olefin. In some embodiments, the first propylene/alpha-olefin copolymer is an propylene/ethylene copolymer, wherein the propylene content is greater than 80 wt.% of the whole polymer and the ethylene content is from 5 to 20 wt.%, or from 8 to 18 wt.% of the whole polymer. The comonomer content may be measured using any suitable technique, such as techniques based on nuclear magnetic resonance ("NMR") spectroscopy, and, for example, by $^{13}$C NMR analysis as described in U.S. Patent 7,498,282.

Such propylene/alpha-olefin copolymers are further described in U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™.

The propylene/alpha-olefin copolymer may be characterized as having substantially isotactic propylene sequences. "Substantially isotactic propylene sequences" means that the sequences have an isotactic triad (mm) measured by 13C nuclear magnetic resonance ("NMR") of greater than about 0.75; in the alternative, greater than about 0.80; in the alternative, greater than about 0.85; in the alternative, greater than about 0.90; in another alternative, greater than about 0.92; in another alternative, greater than about 0.93; in the alternative, greater than about 0.95; or in the alternative, greater than about 0.97. Isotactic triads are well-known in the art and are described in, for example, U.S. Patent No. 5,504,172 and International Publication No. WO 00/01745, which refer to the isotactic sequence in terms of a triad unit in the copolymer molecular chain determined by 13C NMR spectra.

The propylene/alpha-olefin copolymer may be characterized as having a tacticity index m/r ranging from a lower limit of 4 or 6 to an upper limit of 8 or 10 or 12. The tacticity index, expressed herein as "m/r", is determined by 13C NMR. The tacticity index m/r is calculated as defined by H. N. Cheng in MACROMOLECULES, 1984, Vol. 17, pp. 1950-1955. The designation "m" or "r" describes the stereochemistry of pairs of contiguous propylene groups, "m" referring to meso and "r" to racemic. An m/r ratio of 1.0 generally describes a syndiotactic polymer, and an m/r ratio of 2.0 an atactic material. An isotactic material theoretically may have a ratio approaching infinity, and many by-product atactic polymers have sufficient isotactic content to result in ratios of greater than 50.

The propylene/alpha-olefin copolymer may have a density in the range of from 0.850 g/cc to 0.910 g/cc, as measured in accordance with ASTM D792. All individual values and subranges from 0.850 g/cc to 0.910 g/cc are included herein and disclosed herein. For example, the density can be from a lower limit of 0.850 g/cc, 0.853 g/cc, 0.855 g/cc, 0.857 g/cc, 0.860 g/cc, to an upper limit of 0.900 g/cc, 0.895 g/cc, 0.890 g/cc, 0.888 g/cc, 0.885 g/cc, 0.880 g/cc, 0.877 g/cc, 0.875 g/cc, 0.870 g/cc, 0.867 g/cc, 0.865 g/cc. In some embodiments, the propylene/alpha-olefin copolymer may have a density in the range of from 0.857 g/cc to 0.888 g/cc, 0.857 g/cc to 0.877 g/cc, or 0.857 g/cc to 0.867 g/cc.

The propylene/alpha-olefin copolymer may have a melt flow rate in the range of from 0.1 to 35 g/10 minutes, measured in accordance with ASTM D-1238 (at 230°C/2.16 Kg). All individual values and subranges from 0.1 to 35 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 35 g/10 minutes, 30 g/10 minutes, 25 g/10 minutes, 20 g/10 minutes, 18 g/10 minutes, 15 g/10 minutes, 10 g/10 minutes, 8 g/10 minutes, or 5 g/10 minutes. For example, the propylene/alpha-olefin copolymer may have a melt flow rate in the range of from 0.1 to 30 g/10 minutes; from 0.1 to 25 g/10 minutes; from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes.

The propylene/alpha-olefin copolymer may have a crystallinity in the range of from at least 0.5 percent by weight (a heat of fusion of at least 0.75 Joules/gram) to 40 percent by weight (at heat of fusion less than 76 Joules/gram). All individual values and subranges from 0.5 percent by weight (a heat of fusion of at least 0.75 Joules/gram) to 40 percent by weight (a heat of fusion of less than 76 Joules/gram) are included herein and disclosed herein; for example, the crystallinity can be from a lower limit of 0.5 percent by weight (a heat of fusion of at least 0.75 Joules/gram), 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 40 percent by weight (a heat of fusion of less than 76 Joules/gram), 35 percent by weight (a heat of fusion of less than 67 Joules/gram), 30 percent by weight (a heat of fusion of less than 50 Joules/gram), 24 percent by weight (a heat of fusion of less than 40 Joules/gram), 21 percent by weight (a heat of fusion of less than 35 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 40 percent by weight (a heat of fusion of less than 76 Joules/gram); from at least 3 percent by weight (a heat of fusion of at least 5 Joules/gram) to 40 percent by weight (a heat of fusion of less than 76 Joules/gram); from at least 3 percent by weight (a heat of fusion of at least 5 Joules/gram) to 21 percent by weight (a heat of fusion of less than 35 Joules/gram); from at least 3 percent by weight (a heat of fusion of at least 5 Joules/gram) to 15 percent by weight (a heat of fusion of less than 24.8 Joules/gram); from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via differential scanning calorimetry (DSC) method.

In some embodiments, the propylene/alpha-olefin copolymer is, for example, a semi-crystalline polymer having a melting point of less than 115°C, less than 110°C, less than 100°C, or less than 90°C. In other embodiments, the melting point is from 25°C to 100°C. In further embodiments, the melting point is between 40°C and 90°C.

In some embodiments, the propylene/alpha-olefin copolymer may have a molecular weight distribution (MWD), defined as weight average molecular weight divided by number average molecular weight (Mw/Mn) of 3.5 or less; in the alternative 3.0 or less; or in another alternative from 1.8 to 3.0. In other embodiments, the propylene/alpha-olefin copolymer may have a MWD from about 1 to about 40, from about 1 to about 15, or from about 1.8 to about 5. In some embodiments, the propylene/alpha-olefin copolymer may exhibit a bimodal molecular weight distribution. Techniques for determining the molecular weight (Mn and Mw) and MWD may be found in U.S. Pat. No. 4,540,753 (Cozewith, Ju and Ver Strate) and in Macromolecules, 1988, Vol. 21, p. 3360-3371 (Ver Strate et al.).

In one embodiment, the propylene/alpha-olefin copolymers may comprise an average of at least 0.001, at least 0.005, or at least 0.01, long chain branches/1000 total carbons, wherein the term long chain branch, as used herein with regards to propylene/alpha-olefin copolymers, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. The maximum number of long chain branches typically does not exceed 3 long chain branches/1000 total carbons. Such propylene/alpha-olefin copolymers are further described in details in the U.S. Provisional Patent Application No. 60/988,999 and International Patent Application No. PCT/US08/082599.

The core layer is a polymer blend comprising the first propylene/alpha-olefin copolymer with other core layer polymers suitable for melt processing in blown film, cast film, extrusion coating processes or enhancing or modifying elastic performance, which may include, for example, low density polyethylene suitable for improving processability, among other things, one or more propylene/alpha-olefin copolymers as described herein, ethylene random copolymers, such as, the AFFINITY™ resin commercially available from The Dow Chemical Company, or the EXACT™ resin commercially available from Exxon Mobil Corporation, or suitable styrenic block copolymers, such as those marketed under the tradename KRATON™, and commercially available from Kraton Polymers, Inc. As used herein, "polymer blend" refers to a mixture of two or more polymers. The polymer blend may be immiscible, miscible, or compatible. While the first propylene/alpha-olefin copolymer can be blended with one or more core layer polymers, the as-produced first propylene/alpha-olefin copolymer is substantially pure and often comprises a major component of the reaction product of a polymerization process. The core layer comprises a polymer blend of a first propylene/alpha-olefin copolymer and one or more additional core layer polymers, the one or more additional core layer polymers comprise less than 30 wt.% of the core layer, and may comprise less than 25 wt.%, less than 20 wt.%, less than 15 wt.%, less than 10 wt.%, or less than 5 wt.% of the core layer.

The core layer may optionally comprise one or more slip agents. As used herein "slip agent" or "slip additive" means an external lubricant. Examples of suitable slip agents may include, but are not limited to, amide slip agents, such as, for example, saturated fatty acid amides or ethylenebis(amides), an unsaturated fatty acid amides, or ethylenebis(amides) or combinations thereof. In some embodiments, the slip agent may include oleamide, erucamide, linoleamide, erucamidoethylerucamide. oleamidoethyloleamide, erucamidoethyloleamide, oleamidoethylerucamide. stearamidoethylerucamide erucamidoethylpalmitamide. palmitamidoethyloleamide, palmitamide, stearamide, arachidamide, behenamide, stearyl stearamide, palmityl pamitamide. stearyl arachidamide, stearamidoethylstearamide, stearamidoethylpalmitamide, palmitamido-ethylstearamide, or combinations thereof. Such slip agents are also disclosed in, for example, U.S. Patent No. 7,608,668. In some embodiments, the film further comprises a slip agent in the core layer.

The total amount of the one or more slip agents present in the core layer may range from 0-1 wt.%. All individual values and subranges are included and disclosed herein. For example, in some embodiments, the total amount of the one or more slip agents present in the core layer is from 0-0.5 wt.%. In other embodiments, the total amount of the one or more slip agents present in the core layer is from 0.05-0.3 wt.%. Slip additives may be added to a carrier resin in the form of a pre-compound masterbatch. The carrier resin may be a propylene/alpha-olefin copolymer as previously described herein. Suitable methods for incorporating slip agents into a carrier resin are known to those of ordinary skill in the art and can include, for example, melt blending or solution blending, which may be performed using, for example, an extruder (single-screw, twin-screw) or static mixer. In some embodiments, a slip agent masterbatch containing the desired amount of slip agent is incorporated during the film preparation step by dry blending with other polymer resins. For example, in a melt extrusion process, the shear and heat imparted will result in the melting of the masterbatch and the distribution of the slip agent throughout a melt stream that will subsequently become one or more layers disclosed herein. Of course, other suitable methods for incorporating slip agents into the one or more layers may be used, taking into consideration the carrier resin, slip agent, compatibilizers, process aids, stabilizers, modifiers, pigments, and/or other components that may be included in the masterbatch formulation.

## At Least One Outer Layer

In embodiments herein, the at least one outer layer independently comprising a second propylene/alpha-olefin copolymer and an antiblock agent. The second propylene/alpha-olefin copolymer may be a propylene/alpha-olefin copolymer as previously described herein. In some embodiments, the second propylene/alpha-olefin copolymer is an propylene/ethylene copolymer, wherein the propylene content is greater than 80 wt.% of the whole polymer and the ethylene content is from 5 to 20 wt.%, or from 8 to 18 wt.% of the whole polymer. In some embodiments herein, the first propylene/alpha-olefin copolymer is different from the second propylene/alpha-olefin copolymer.

In embodiments herein, the second propylene/alpha-olefin copolymer may have a melt flow rate in the range of from 0.1 to 35 g/10 minutes, measured in accordance with ASTM D-1238 (at 230°C/2.16 Kg). All individual values and subranges from 0.1 to 35 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 35 g/10 minutes, 30 g/10 minutes, 25 g/10 minutes, 20 g/10 minutes, 18 g/10 minutes, 15 g/10 minutes, 10 g/10 minutes, 8 g/10 minutes, or 5 g/10 minutes. For example, the propylene/alpha-olefin copolymer may have a melt flow rate in the range of from 0.1 to 30 g/10 minutes, from 0.1 to 25 g/10 minutes, from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes. In some embodiments, the melt flow rate of the first propylene/alpha-olefin copolymer is different than the melt flow rate of the second propylene/alpha-olefin copolymer.

The second propylene/alpha-olefin copolymer may independently comprise at least 50 wt.% of the at least one outer layer. For example, in some embodiments, the second propylene/alpha-olefin copolymer may independently comprise at least 55 wt.%, 60 wt.%, 65 wt.%, 70 wt.%, 75 wt.%, 80 wt.%, 85 wt.%, 90 wt.%, 95 wt.%, or 99 wt.% of the at least one outer layer.

The second propylene/alpha-olefin copolymer may have a low to moderate level of crystallinity, and is described above. In embodiments herein, the crystallinity of the first propylene/alpha-olefin copolymer may be greater than or equal to the crystallinity of the second propylene/alpha-olefin copolymer. The crystallinity may also be described in terms of thermal energy. The thermal energy (or heat of fusion) for 100% crystalline polypropylene is taken to be 165 J/g. In some embodiments herein, the first propylene/alpha-olefin copolymer may have a heat of fusion greater than or equal to the second propylene/alpha-olefin copolymer.

The level of crystallinity may also be reflected in the melting point. "Melting point" is determined by DSC. The second propylene/alpha-olefin copolymer may have one or more melting points, with the peak having the highest heat flow (i.e., tallest peak height) being considered the melting point. The second propylene/alpha-olefin copolymer may have a melting point, as determined by DSC, of less than 115°C, less than 110°C, less than 100°C, or less than 90°C, from 25°C to 100°C, or from 40°C and 90°C. In some embodiments, the melting point of the first propylene/alpha-olefin copolymer is equal to or greater than the melting point of the second propylene/alpha-olefin copolymer.

In some embodiments, the at least one outer layer may also be a polymer blend comprising the second propylene/alpha-olefin copolymer with other at least one outer layer polymers suitable for melt processing in blown film, cast film, extrusion coating processes or enhancing or modifying elastic performance, which may include, for example, low density polyethylene suitable for improving processability, among other things, one or more propylene/alpha-olefin copolymers as described herein, ethylene random copolymers, such as, the AFFINITY™ resin commercially available from The Dow Chemical Company, or the EXACT™ resin commercially available from Exxon Mobil Corporation, or suitable styrenic block copolymers, such as those marketed under the tradename KRATON™, and commercially available from Kraton Polymers, Inc. The polymer blend may be immiscible, miscible, or compatible. While the second propylene/alpha-olefin copolymer can be blended with one or more at least one outer layer polymers, the as-produced second propylene/alpha-olefin copolymer is substantially pure and often comprises a major component of the reaction product of a polymerization process. In embodiments where the at least one outer layer comprises a polymer blend of a second propylene/alpha-olefin copolymer and one or more additional at least one outer layer polymers, the one or more additional at least one outer layer polymers may comprise less than 30 wt.%, less than 25 wt.%, less than 20 wt.%, less than 15 wt.%, less than 10 wt.%, or less than 5 wt.% of the at least one outer layer.

In some embodiments, the at least one outer layer independently comprises a polymer blend comprising the second propylene/alpha-olefin copolymer and one or more additional propylene/alpha-olefin copolymers having a melt flow rate of 0.1 g/10 min to 35 g/10 min. In some embodiments, the crystallinity of the polymer blend in the at least one outer layer may be equal to or less than the crystallinity of the first propylene/alpha-olefin copolymer in the core layer. In other embodiments, the crystallinity of the polymer blend in the at least one outer layer may be equal to or less than the crystallinity of the polymer blend in the core layer.

In embodiments herein, the at least one outer layer independently comprises an antiblock agent. Examples of suitable antiblock agents may include, but are not limited to, clay, aluminum silicate, diatomaceous earth, silica, talc, calcium carbonate, limestone, fumed silica, magnesium sulfate, magnesium silicate, alumina trihydrate, magnesium oxide, zinc oxide, titanium dioxide, or combinations thereof. In some embodiments, the antiblock agent is selected from the group consisting of talc, calcium carbonate, silica, nephilene syenite, and combinations thereof. Other suitable antiblock agents can be found in U.S. Pat. 7,741,397 and Zweifel Hans et al., "Plastics Additives Handbook," Hanser Gardner Publications, Cincinnati, Ohio, 5th edition, Chapter 7, pages 585-600 (2001).

The antiblock agent may be independently present in the at least one outer layer in amounts ranging from 2.5 wt.% to 30 wt.%. In some embodiments, the antiblock agent may be independently present in the at least one outer layer in amounts ranging from 2.5 wt.% to 25 wt.%, 2.5 wt.% to 20 wt.%, 2.5 wt.% to 18 wt.%, 3.5 wt.% to 18 wt.%, 5 wt.% to 20 wt.%, 5 wt.% to 18 wt.%, or 5 wt. to 15 wt.% of the at least one outer layer. Suitable methods for incorporating antiblock agents into a carrier resin are known to those of ordinary skill in the art and can include, for example, melt blending or solution blending, which may be performed using, for example, an extruder (single-screw, twin-screw) or static mixer. In some embodiments, an antiblock masterbatch containing the desired amount of antiblock agent is incorporated during the film preparation step by dry blending with other polymer resins. For example, in a melt extrusion process, the shear and heat imparted will result in the melting of the masterbatch and the distribution of the antiblock agent throughout a melt stream that will subsequently become one or more layers disclosed herein. Of course, other suitable methods for incorporating antiblock agents into the one or more layers may be used, taking into consideration the carrier resin, slip agent, compatibilizers, process aids, stabilizers, modifiers, pigments, and/or other components that may be included in the masterbatch formulation.

The at least one outer layer may optionally comprise one or more slip agents. Examples of suitable slip agents are outlined above. In some embodiments, the film further comprises a slip agent in the at least one outer layer. In other embodiments, the film further comprises a slip agent in the at least one outer layer, and optionally, in the core layer. In further embodiments, the film further comprises a slip agent in the at least one outer layer and the core layer. The total amount of the one or more slip agents independently present in the at least one outer layer may range from 0-1 wt.%. All individual values and subranges are included and disclosed herein. For example, in some embodiments, the total amount of the one or more slip agents present in the at least one outer layer is from 0-0.5 wt.%. In other embodiments, the total amount of the one or more slip agents present in the at least one outer layer is from 0.05-0.3 wt.%. Suitable methods for incorporating slip agents into a carrier resin are previously described above.

In some embodiments, compatibilizers may also be present in the at least one outer layer. Compatibilizers may be used for a variety of reasons including, increasing the ability of a polymer to wet the surface of antiblock agents. Polymeric compatibilizers may comprise polymers or blends thereof with functional groups, such as, polar functional groups. Suitable compatibilizers for the present invention include, but are not limited to, ethylene ethyl acrylate (AMPLIFY™ EA), maleic anhydride grafted polyethylene (AMPLIFY™ GR), ethylene acrylic acid (PRIMACOR™), ionomers (AMPLIFY™ IO), and other functional polymers (AMPLIFY™ TY), all of which are available from The Dow Chemical Company; maleic anhydride styrenic block copolymer (KRATON™ FG), available from Kraton Polymers; maleic anhydride grafted polyethylene, polypropylene, copolymers (EXXELOR™), available from The ExxonMobil Chemical Company; modified ethylene acrylate carbon monoxide terpolymers, ethylene vinyl acetates (EVAs), polyethylenes, metallocene polyethylenes, ethylene propylene rubbers and polypropylenes with acid, maleic anhydride, acrylate functionality (FUSABOND™, BYNEL™, NUCREL™, ELVALOY™, ELVAX™) and ionomers (SURLYN™), available from E. I. du Pont de Nemours and Company.

Optional Inner Layers

As noted above, in some embodiments herein the film may comprise an optional inner layer. The inner layer may comprise a third propylene/alpha-olefin copolymer, which may be an propylene/alpha-olefin copolymer as previously described herein. In some embodiments, the second propylene/alpha-olefin copolymer is different from the third propylene/alpha-olefin copolymer. In other embodiments, the first propylene/alpha-olefin copolymer is different from the third propylene/alpha-olefin copolymer. In further embodiments, the first and second propylene/alpha-olefin copolymers are different from the third propylene/alpha-olefin copolymer.

In embodiments herein, the third propylene/alpha-olefin copolymer may have a crystallinity that is equal to or greater than the crystallinity of the first and/or second propylene/alpha-olefin copolymer. In embodiments herein, the third propylene/alpha-olefin copolymer has a melt flow rate that is equal to or greater than the melt flow rate of the first and/or second propylene/alpha-olefin copolymer. In some embodiments, the third propylene/alpha-olefin copolymer is an propylene/ethylene copolymer, wherein the propylene content is greater than 80 wt.% of the whole polymer and the ethylene content is from 5 to 20 wt.%, or from 8 to 18 wt.% of the whole polymer. In further embodiments, the third propylene/alpha-olefin copolymer is different from the first and/or second propylene/alpha-olefin copolymer.

The third propylene/alpha-olefin copolymer may comprise at least 50 wt.% of the inner layer. For example, in some embodiments, the third propylene/alpha-olefin copolymer may comprise at least 55 wt.% of the inner layer, 60 wt.% of the inner layer, 65 wt.% of the inner layer, 70 wt.% of the inner layer, 75 wt.% of the inner layer, at least 85 wt.% of the inner layer, at least 95 wt.% of the inner layer, at least 99 wt.% of the inner layer, or at least 100 wt.% of the inner layer.

In some embodiments, the inner layer may also comprise the third propylene/alpha-olefin copolymer and one or more additional polymers suitable for melt processing in blown film, cast film, extrusion coating processes or enhancing or modifying elastic performance, which may include, for example, low density polyethylene suitable for improving processability, among other things, one or more propylene/alpha-olefin copolymers as described herein, ethylene random copolymers, such as, the AFFINITY™ resin commercially available from The Dow Chemical Company, or the EXACT™ resin commercially available from Exxon Mobil Corporation, or suitable styrenic block copolymers, such as those marketed under the tradename KRATON™, and commercially available from Kraton Polymers, Inc. The polymer blend may be immiscible, miscible, or compatible. While the third propylene/alpha-olefin copolymer can be blended with one or more optional inner layer polymers, the as-produced third propylene/alpha-olefin copolymer is substantially pure and often comprises a major component of the reaction product of a polymerization process. In embodiments where the optional inner layer comprises a polymer blend of a third propylene/alpha-olefin copolymer and one or more additional optional inner layer polymers, the one or more additional optional inner layer polymers may comprise less than 30 wt.%, less than 25 wt.%, less than 20 wt.%, less than 15 wt.%, less than 10 wt.%, or less than 5 wt.% of the optional inner layer.

Similar to the core layer and the at least one outer layer, the inner layer may optionally comprise one or more slip agents as outlined above. In some embodiments, the film further comprises a slip agent in the inner layer. In other embodiments, the film further comprises a slip agent in the at least one outer layer and inner layer, and optionally, the core layer. In further embodiments, the film further comprises a slip agent in the at least one outer layer, the core layer, and the inner layer. The total amount of the one or more slip agents present in the inner layer may range from 0-1 wt.%. All individual values and subranges are included and disclosed herein. For example, in some embodiments, the total amount of the one or more slip agents present in the at least one outer layer is from 0-0.5 wt.%. In other embodiments, the total amount of the one or more slip agents present in the at least one outer layer is from 0.05-0.3 wt.%.

Films & Laminates

The film may further comprise non-polymeric additives that can be added to one or more layers. Exemplary additives may include, process oil, flow improvers, fire retardants, antioxidants, plasticizers, pigments, vulcanizing or curative agents, vulcanizing or curative accelerators, cure retarders, processing aids, UV stabilizers, antistats, pigments, flame retardants, tackifying resins, and the like. These compounds may include fillers and/or reinforcing materials. Other additives, which may be employed to enhance properties, include coloring agents. Lubricants, nucleating agents, reinforcements, and fillers (including granular, fibrous, or powder-like) may also be employed. The exemplary lists provided above are not exhaustive of the various kinds and types of additives that can be employed with the present invention.

In embodiments herein, the film may be a cast film or a blown film. The overall thickness of the film is not particularly limited, but, in some embodiments, may be less than 20 mils, less than 16 mils, less than 10 mils, or less than 5 mils. The thickness of any of the individual layers can vary widely, and may be determined by process, use and economic considerations.

In embodiments herein, the film may minimize the probability and severity of film blocking on rolls prior to lamination. Blocking refers to a defect in which film layers on a roll fuse or adhere together making the roll difficult to unwind for subsequent processing steps. Without intending to be bound by theory, it is believed that films described herein minimize the tendency of blocking by lowering temperature, pressure, various pressure points, in-wound tension, and surface area contact. It should be understood, however, that the need to minimize blocking is balanced against competing needs, such as, film handling, and other subsequent conversion steps. Various methods suitable for quantifying film blocking include ASTM D3354-11, ISO 11502, and others.

In embodiments herein, the film may exhibit a reduction in permanent set as compared to an identical film that has not been stretch-modified. In some embodiments, the film may exhibit a 2.5% reduction in permanent set as compared to an identical film that has not been stretch-modified. In other embodiments, the film may exhibit a 5% reduction in permanent set as compared to an identical film that has not been stretch-modified. In further embodiments, the film may exhibit a 7.5% reduction in permanent set as compared to an identical film that has not been stretch-modified. In even further embodiments, the film may exhibit a 10% reduction in permanent set as compared to an identical film that has not been stretch-modified. In even further embodiments, the film may exhibit a 12.5% reduction in permanent set as compared to an identical film that has not been stretch-modified. In even further embodiments, the film may exhibit a 15% reduction in permanent set as compared to an identical film that has not been stretch-modified. In even further embodiments, the film may exhibit a 20% reduction in permanent set as compared to an identical film that has not been stretch-modified.

The films described herein may be used in a laminate. The laminated may comprise a substrate laminated to a side of the film. As used herein the term "laminate" refers to a composite structure of two or more sheet material layers that have been adhered through a bonding step, such as through adhesive bonding, thermal bonding, point bonding, pressure bonding, extrusion coating or ultrasonic bonding. For instance, a multilayered laminate may include some layers of nonwovens. As used herein, the term "nonwoven web," or "nonwoven fabric," or "nonwoven" refers to a web that has a structure of individual fibers or threads which are interlaid, but not in any regular, repeating manner. Nonwoven webs may be formed by a variety of processes, such as, for example, air laying processes, meltblowing processes, spunbonding processes and carding processes, including bonded carded web processes. "Meltblown" refers to the process of extruding a molten thermoplastic material through a plurality of fine, usually circular, die capillaries as molten threads or filaments into a high velocity gas (e.g., air) stream which attenuates the filaments of molten thermoplastic material to reduce their diameter, which may be to a microfiber diameter. Thereafter, the meltblown fibers are carried by the high velocity gas stream and are deposited on a collecting surface to form a web of randomly dispersed meltblown fibers. "Spunbonded" refers to the process of extruding a molten thermoplastic material as filaments from a plurality of fine, usually circular, capillaries of a spinneret with the diameter of the extruded filaments then being rapidly reduced by drawing the fibers and collecting the fibers on a substrate.

The nonwoven web may comprise a single web, such as a spunbond web, a carded web, an airlaid web, a spunlaced web, or a meltblown web. However, because of the relative strengths and weaknesses associated with the different processes and materials used to make nonwoven fabrics, composite structures of more than one layer are often used in order to achieve a better balance of properties. Such structures are often identified by letters designating the various lays such as SM for a two layer structure consisting of a spunbond layer and a meltblown layer, SMS for a three layer structure, or more generically $SX_nS$ structures, where "X" can be independently a spunbond layer, a carded layer, an airlaid layer, a spunlaced layer, or a meltblown layer and "n" can be any number, although for practical purposes is generally less than 5. In order to maintain structural integrity of such composite structures, the layers must be bonded together. Common methods of bonding include point bonding, adhesive lamination, and other methods known to those skilled in the art. All of these structures may be used in the present invention.

The nonwovens can also be laminates such as spunbond layers and some meltblown layers, such as a spunbond/meltblown/spunbond (SMS) laminate and others as disclosed in U.S. Pat. No. 4,041,203 to Brock et al., U.S. Pat. No. 5,169,706 to Collier, et al., U.S. Pat. No. 5,145,727 to Potts et al., U.S. Pat. No. 5, 178,931 to Perkins et al., and U.S. Pat. No. 5,188,885 to Timmons et al.. The nonwoven may be an elastic nonwoven comprised of elastic materials or an extensible nonwoven, such as, spunlaced materials which are hydroentangled spun-melt nonwovens. The nonwoven may be inelastic, but elongatable or extensible. Such inelastic nonwovens may be used in elastic laminates by bonding them to the elastic film while the elastic film is in a stretched condition so that when the elastic film is allowed to retract the nonwoven gathers or puckers between the portions where the nonwoven is bonded to the elastic film creating corrugations in the nonwovens. This live stretch process of lamination is described in U.S. Pat. No. 4,720,415. Other means of corrugating nonwovens are available commercially, such as those supplied by Micrex. Extensible, but inelastic nonwovens can also be used in elastic laminates through a process described as incremental stretching. In these processes the elastic film and extensible, but non-elastic nonwoven are joined in the unstretched state. The laminate is then subjected to stretching or tension as described in U.S. Pat. Nos. 5,167,897, 4,107,364, 4,209,463, and 4,525,407. When the tension is released on the web the nonwoven is permanently deformed in the areas where it was stretched and does not go back to its original shape so that the elastic laminate is now able to stretch and recover without significant constraint from the nonwoven in the areas where it has been pre-stretched.

The stretch-modified elastomeric multilayer films may be formed by providing a multilayer film comprising a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, and wherein the one or more additional core layer polymers comprise less than 30 wt.% of the core layer, and at least one outer layer independently comprising a second propylene/alpha-olefin copolymer and from 2.5 to 30 wt.% of an antiblock agent, wherein the second propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, wherein the crystallinity of the first propylene/alpha-olefin copolymer is equal to or greater than the crystallinity of the second propylene/alpha-olefin copolymer; performing a first stretch of the film in at least one direction to an elongation of 100% or greater of its original length to form a stretch-modified multilayer film; and substantially relaxing the stretch-modified multilayer film in the at least one direction. In some embodiments, a first stretch of the film is performed in at least one direction to an elongation of greater than 300% of its original length to form the stretch-modified multilayer film. In other embodiments, a first stretch of the film is performed in at least one direction to an elongation of 350% or greater of its original length to form the stretch-modified multilayer film. In further embodiments, a first stretch of the film is performed in at least one direction to an elongation of 400% or greater of its original length to form the stretch-modified multilayer film. In even further embodiments, a first stretch of the film is performed in at least one direction to an elongation of 450% or greater of its original length to form the stretch-modified multilayer film. In even further embodiments, a first stretch of the film is performed in at least one direction to an elongation of 500% or greater of its original length to form the stretch-modified multilayer film.

Stretching may be accomplished by methods known in the art, such as, ring rolling, tenter framing, incremental stretching, or other suitable methods known in the art. Examples of stretching methods can also be found in U.S. Patent or Publication Nos. 4,368,565, 5,143,679, 5,156,793, 5,167,897, 8,337,190, 2003/0088228, or 2004/0222553. For illustration purposes only, in some embodiments, stretching is accomplished through the use of at least one pair of intermeshed grooved rolls or intermeshed discs. *See, for e.g.,* U.S. Pat. No. 4,153,751, U.S. Pat. No. 4,368,565, International App. No. WO 2004/020174, and U.S. Pub. No. 2006/0003656.

In some embodiments, the process further comprises laminating the stretch-modified multilayer film to at least one substrate to form a laminate. As previously noted herein the substrate may be a nonwoven, elastic nonwoven, or an extensible, but non-elastic nonwoven. In some embodiments, the laminates may be formed using a process that is in-line with the stretching. The laminates may undergo subsequent processing steps to provide a finished, desired product. For example, in some embodiments, the laminate may be subjected to a second stretch in at least one direction to an elongation of 250% or less of its pre-second stretch length. Such methods are often applied to extensible, but non-elastic nonwoven film laminates to make them more elastic. Examples of such similar stretching methods are described above. It should be understood that this step is optional, and in other embodiments, the laminate does not undergo a second stretch. Additional embodiments are described and illustrated in the accompanying figures.

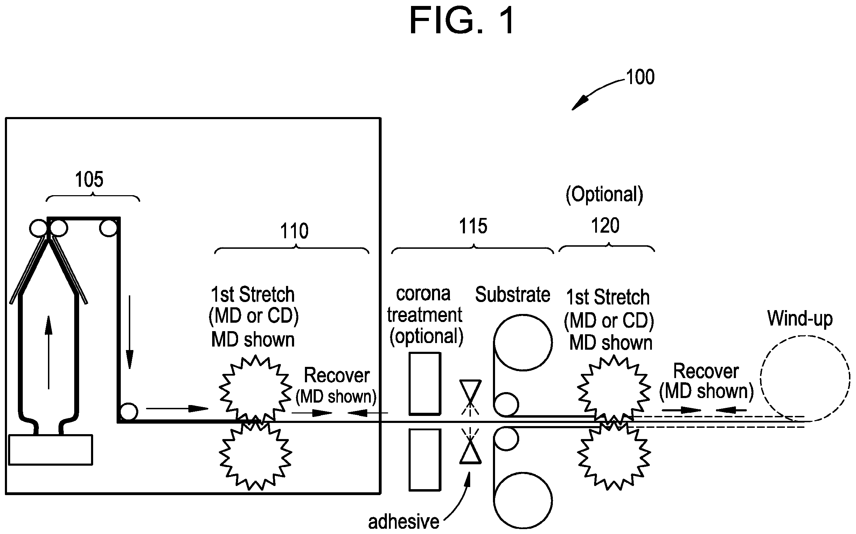

Referring to FIG. 1, depicted is an in-line blown film process (100) that may be used to prepare stretch-modified multilayer films. In a first step (105), a multilayer blown film is coextruded. The multilayer film may comprise a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, and wherein the one or more additional core layer polymers comprise less than 30 wt.% of the core layer; and at least one outer layer independently comprising a second propylene/alpha-olefin copolymer and from 2.5 to 30 wt.% of an antiblock agent, wherein the second propylene/alpha-olefin copolymer and from 2.5 to 30 wt.% of an antiblock agent, wherein the second propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, wherein the crystallinity of the first propylene/alpha-olefin copolymer is equal to or greater than the crystallinity of the second propylene/alpha-olefin copolymer. In a second step (110), the multilayer blown film is then stretched in at least one direction to an elongation of 100% or greater of its original length to form a stretch-modified multilayer film. The stretch-modified multilayer film is allowed to substantially relax in the at least one direction of elongation. In a third step (115), the stretch-modified multilayer film is laminated to at least one substrate to form a laminate.

In some embodiments, at least one of the surfaces of the stretch-modified multilayer film may optionally be treated by flame, plasma, or corona to improve properties, such as, adhesion or printability. Prior to lamination, an adhesive, for e.g., a hot melt adhesive, may also be optionally applied either to the stretch-modified multilayer film or substrate. Of course, other lamination techniques may be used, which may include laminating the stretch modified multilayer film via thermal bonding or ultrasonic bonding to another film or non-woven material. In an optional fourth step (120), the laminate may undergo a second stretch in at least one direction to an elongation of 250% or less of its pre-second stretch length. In some embodiments, the laminate does not undergo a second stretch. In embodiments where the laminate has undergone a second stretch, the laminate may be allowed to substantially relax in the at least one direction of the second stretch. The laminate may then be wound into a roll. It should be understood herein that the process shown and described in FIG. 1 is merely exemplary, and it would be obvious to those skilled in the art that various other changes and modifications can be made without departing from the spirit and scope of the invention. For example, each step may be performed continuously (i.e., in-line as shown), semi-continuously, or in separate unit operations. In some embodiments, an intermediate material may be produced that, in some examples, may be temporarily wound into a roll until it is ready further processing, at which point, the intermediate material is unwound and processed. The intermediate material may be produced after one or more process steps.

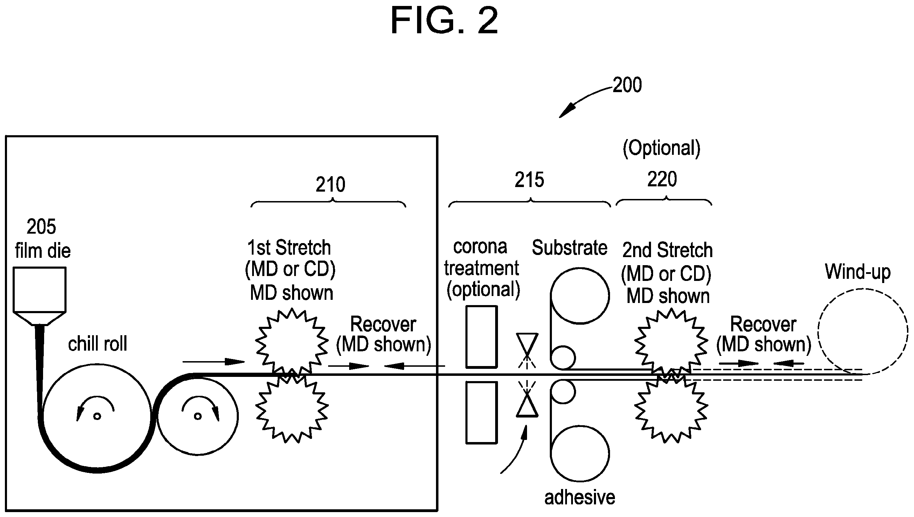

Referring to FIG. 2, depicted is an in-line cast film process (200) that may be used to prepare stretch-modified multilayer films. In a first step (205), a multilayer cast film is coextruded. The multilayer film may comprise a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, and wherein the one or more additional core layer polymers comprise less than 30 wt.% of the core layer; and at least one outer layer independently comprising a second propylene/alpha-olefin copolymer and from 2.5 to 30 wt.% of an antiblock agent, wherein the second propylene/alpha-olefin copolymer and from 2.5 to 30 wt.% of an antiblock agent, wherein the second propylene/alpha-olefin copolymer comprises at least 50 wt.% propylene, has a melt flow rate (230°C/2.16 Kg) from 0.1 g/10 min to 35 g/10 min, and has a crystallinity in the range of from at least 1 percent by weight to 30 percent by weight, wherein the crystallinity of the first propylene/alpha-olefin copolymer is equal to or greater than the crystallinity of the second propylene/alpha-olefin copolymer. In a second step (210), the multilayer cast film is then stretched in at least one direction to an elongation of 100% or greater of its original length to form a stretch-modified multilayer film. The stretch-modified multilayer film is allowed to substantially relax in the at least one direction of elongation. In a third step (215), the stretch-modified multilayer film is laminated to at least one substrate to form a laminate.

In some embodiments, at least one of the surfaces of the stretch-modified multilayer film may optionally be treated by flame, plasma, or corona to improve properties, such as, adhesion or printability. Prior to lamination, an adhesive, for e.g., a hot melt adhesive, may be optionally applied either to the stretch-modified multilayer film or substrate. Of course, as noted above, other lamination techniques may be used, which may include laminating the stretch modified multilayer film via thermal bonding or ultrasonic bonding to another film or non-woven material. In an optional fourth step (220), the laminate may undergo a second stretch in at least one direction to an elongation of 250% or less of its pre-second stretch length. In some embodiments, the laminate does not undergo a second stretch. In embodiments where the laminate has undergone a second stretch, the laminate may be allowed to substantially relax in the at least one direction of the second stretch. The laminate may then be wound into a roll. It should be understood herein that the process shown and described in FIG. 2 is merely exemplary, and it would be obvious to those skilled in the art that various other changes and modifications can be made without departing from the spirit and scope of the invention. For example, each step may be performed continuously (i.e., in-line as shown), semi-continuously, or in separate unit operations. In some embodiments, an intermediate material may be produced that, in some examples, may be temporarily wound into a roll until it is ready further processing, at which point, the intermediate material is unwound and processed. The intermediate material may be produced after one or more process steps.

## TEST METHODS

Unless otherwise stated, the following test methods are used. All test methods are current as of the filing date of this disclosure.

### Density

Density is determined according to ASTM D792.

### Melt Index

Melt index (12) is determined according to ASTM D1238 at 190°C, 2.16 kg.

### Melt Flow Rate

Melt flow rate (MFR) is determined according to ASTM D1238 at 230°C, 2.16 kg.

### Differential Scanning Calorimetry (DSC)

Differential scanning calorimetry (DSC) is a common technique that can be used to examine the melting and crystallization of semi-crystalline polymers. General principles of DSC measurements and applications of DSC to studying semi-crystalline polymers are described in standard texts (e.g., E. A. Turi, ed., Thermal Characterization of Polymeric Materials, Academic Press, 1981). In some embodiments, the propylene/alpha-olefin copolymers described herein are characterized by a DSC curve with a $T_{me}$ that remains essentially the same and a $T_{max}$ that decreases as the amount of unsaturated comonomer in the copolymer is increased. $T_{me}$ means the temperature at which the melting ends and $T_{max}$ means the peak melting temperature, both as determined by one of ordinary skill in the art from DSC analysis using data from the final heating step. Differential Scanning calorimetry (DSC) analysis is determined using a model Q1000 DSC from TA Instruments, Inc. Calibration of the DSC is done as follows. First, a baseline is obtained by running the DSC from -90°C. to 290°C. without any sample in the aluminum DSC pan. Then 7 milligrams of a fresh indium sample is analyzed by heating the sample to 180°C., cooling the sample to 140°C. at a cooling rate of 10°C./min followed by keeping the sample isothermally at 140°C. for 1 minute, followed by heating the sample from 140°C. to 180°C. at a heating rate of 10°C./min. The heat of fusion and the onset of melting of the indium sample are determined and checked to be within 0.5°C. from 156.6°C. for the onset of melting and within 0.5 J/g from 28.71 J/g for the heat of fusion. Then deionized water is analyzed by cooling a small drop of fresh sample in the DSC pan from 25°C. to -30°C. at a cooling rate of 10°C./min. The sample is kept isothermally at -30°C. for 2 minutes and heated to 30°C. at a heating rate of 10°C./min. The onset of melting is determined and checked to be within 0.5°C. from 0°C.

For samples which have a heat of fusion greater than 2 J/g, the method is as follows: the samples are pressed into a thin film at a temperature of 190°C. About 5 to 8 mg of sample is weighed out and placed in the DSC pan. The lid is crimped on the pan to ensure a closed atmosphere. The sample pan is placed in the DSC cell and the heated at a high rate of about 100°C./min to a temperature of about 30°C. above the melt temperature. The sample is kept at this temperature for about 3 minutes. Then the sample is cooled at a rate of 10°C./min to -40°C., and kept isothermally at that temperature for 3 minutes. Consequently the sample is heated at a rate of 10°C./min until complete melting. The resulting enthalpy curves may be analyzed for peak melt temperature, onset and peak crystallization temperatures, heat of fusion and heat of crystallization, $T_{me}$, $T_{max}$, and any other quantity of interest from the corresponding thermograms as described in US Patent Application No (WO/2003/040201).

For samples which have a heat of fusion of less than 2 J/g, the method is as follows: the samples are pressed into a thin film at a temperature of 190°C. About 5 to 8 mg of sample is weighed out and placed in the DSC pan. The lid is crimped on the pan to ensure a closed atmosphere. The sample pan is placed in the DSC cell and the heated at a high rate of about 100°C./min to a temperature of about 210°C. The sample is kept at 210°C. for 3 minutes. The sample is then cooled at a rate of 10°C./min until 23°C. The sample is removed from DSC and stored at ambient conditions (23°$\pm$2° C. and 50$\pm$5% relative humidity) for 48 hours. The sample is inserted into the DSC and cooled at a rate of 10°C./min to -40°C. and kept isothermally at that temperature for 3 minutes. Then the sample is heated at a rate of 10°C./min until complete melting. Heat of fusion is determined from the thermogram as described in PCT Patent Application No WO/2003/040201.).

The % crystallinity for polypropylene resins may be calculated using the following equation:

$$\% \ Crystallinity = \frac{Heat \ of \ fusion \ (J/g)}{165 \ J/g} \ x \ 100\%$$

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

**EXAMPLES**

The embodiments described herein may be further illustrated by the following non-limiting examples. The following materials are used in the Examples described below.

**Preparation of Inventive & Comparative Films**

**Table 1 - Resins**

| Resin | Label | Density (g/cm³) | MI (I₂) or MFR (g/10 min) | Melting Point (°C) | Ethyl Acrylate Content (wt. %) | Description |
|---|---|---|---|---|---|---|
| AMPLIFY™ EA 103 | A | 0.93 | 21 | 95 | 19.5 | ethylene ethyl acrylate |
| INFUSE™ 9530 | B | 0.877 | 5 | 119 | | ethylene-octene block copolymer |
| VERSIFY™ 3401 | C | 0.863 | 8 | 119 | | Propylene-ethylene-copolymer having a crystallinity of 6.9% |
| INFUSE™ 9817 | D | 0.877 | 15 | 118 | | ethylene-octene block copolymer |
| The INFUSE™, AMPLIFY™ and VERSIFY™ resins are commercially available from The Dow Chemical Company (Midland, MI, USA). | | | | | | |

**Table 2 - Additives**

| | Label | Component | Component | Density (g/cm$^3$) | MI(g/10min) | Loading (wt %) |
|---|---|---|---|---|---|---|
| Antiblock | AB1 | INFUSE™ 9817 | D | 0.877 | 15 | 45 |
| | | AMPLIFY™ EA 103 | A | 0.93 | 21 | 5 |
| | | Nepheline Syenite | | 2.61 | --- | 50 |
| | S1 | Erucamide | Erucamide | | --- | 5 |
| | | INFUSE™ 9530 | B | 0.877 | 5 | 95 |

A three layer cast film was made using a Cloeren five layer Feedblock and die. Layer I corresponds to a first outer layer, layers II, III, and IV correspond to the core layer, and layer V corresponds to a second outer layer. The films were produced according to the specifications provided below in Tables 3, 4, & 5. The composition of each layer in the three layer films produced is outlined below in Table 6.

**Table 3 - Cast Film Line Equipment**

| 5-Layer Line Specifications |
|---|
| 2 x 50 mm extruders (outer layers) |
| 3 x 57 mm extruders (core layer) |
| 914 mm film auto gauge die |
| Scantec X-Ray gauge scanner |
| Air knife and vacuum box |

**Table 4 - Extruder Conditions**

| Extruder No. | Extruder Specifications | Barrel Temperature | | Extruder Speed (rpm) |
|---|---|---|---|---|
| | | No. | Temp. (°F) | |
| 1 | Die temperature: 400°F | | | 35.3 |
| | Melt temperature: 416.3°F | 1 | 299.7 | |
| | Pressure: 1946 psi | 2 | 398.8 | |
| | Speed: 15 rpm | 3 | 399.4 | |
| | Current: 64% | 4 | 400.5 | |
| 2 | Die temperature: 400°F | 1 | 299.3 | 19.3 |
| | Melt temperature: 340.7°F | 2 | 399.9 | |
| | Pressure: 5223 psi | 3 | 399.4 | |
| | Speed: 46 rpm | 4 | 399.6 | |
| | Current: 79% | 5 | 400.5 | |
| 3 | Die temperature: 400°F | 1 | 299.1 | 26.2 |
| | Melt temperature: 406.2°F | 2 | 398.8 | |
| | Pressure: 5432 psi | 3 | 398.8 | |
| | Speed: 45 rpm | 4 | 399.7 | |
| | Current: 85% | 5 | 400.8 | |
| 4 | Die temperature: 400°F | 1 | 299.7 | 23.9 |
| | Melt temperature: 400.3°F | 2 | 398.8 | |
| | Pressure: 5230 psi | 3 | 398.8 | |
| | Speed: 135 rpm | 4 | 399.7 | |
| | Current: 80% | 5 | 400.3 | |

(continued)

| Extruder No. | Extruder Specifications | Barrel Temperature | | Extruder Speed (rpm) |
|---|---|---|---|---|
| 5 | Die temperature: 400°F<br>Melt temperature: 671.5°F<br>Pressure: 1327 psi<br>Speed: 14 rpm<br>Current: 63% | 1<br>2<br>3<br>4 | 299.5<br>399.2<br>399.7<br>400.6 | 36.2 |

**Table 5 - Cast Film Conditions**

| | Temperature (°F) |
|---|---|
| Die Front Zone 1 | 400.5 |
| Die Front Zone 2 | 401 |
| Die Front Zone 3 | 400.8 |
| Die Front Zone 4 | 400.3 |
| Die Front Zone 5 | 400.3 |
| Die Back Zone 1 | 400.5 |
| Die Back Zone 2 | 400.5 |
| Die Back Zone 3 | 400.6 |
| Die Back Zone 4 | 400.1 |
| Die Back Zone 5 | 400.5 |
| Cast Roll | 69.3 |
| Chill Roll | 68.5 |
| | |
| Air knife speed | 40 |
| Line Speed (ft/min) | 135 |
| Single Ply Film Thickness (mil) | 2.5 |

**Table 6 - Multilayer Films**

| Multilayer Film | | | |
|---|---|---|---|
| Component | Skin layer (20 wt.%) | Core Layer (60 wt.%) | Skin layer (20 wt.%) |
| C | 51% | 96% | 51% |
| AB1 | 45% | -- | 45% |
| S1 | 4% | 4% | 4% |

The inventive films are stretch-modified (i.e., the films received a first stretch). The comparative films are identical to the inventive films, but have not been stretch-modified (i.e., did not receive a first stretch). The inventive films underwent a first stretch in a cross-direction stretching machine available from Biax-Fiberfilm Corporation (Neenah, WI, USA). The Biax cross-direction stretching machine is described in U.S. Pat. No. 4,368,565 and the cross-direction draw ratio is calculated as described above. The width (w) or distance between the discs (center-to-center) as illustrated in Fig. 3 of the '892 patent was set at 0.135 in. The groove depth (d) or depth of engagement of the interdigitating disc was set to 0.323 in order to achieve a draw ratio (l/w) of 4.96. The first stretch draw ratios are further outlined in Table 7 below. Table 7 also illustrates that the strain at break and stress at break are not significantly affected by the first stretch.

**Table 7**

| Film | 1st Stretch Draw Ratio (l/w) | Thickness (mm) | Strain at Break (%) | Stress at Break (MPa) |
|---|---|---|---|---|
| Comparative | 0 | 0.058 | 934.61 | 8.41 |
| Inventive | 4.96 | 0.045 | 747.02 | 7.90 |

**Hysteresis Test Results**

The hysteresis test results are shown below in Table 8. The % change in permanent set (PS) is determined as follows:

$$\% \ Change \ in \ PS = \frac{(PS \ of \ Inv. \ Film) - (PS \ of \ Comp. \ Film)}{(PS \ of \ Comp. \ Film)} \ x \ 100\%$$

The % change in first cycle retraction force (1st RF) is determined as follows:

$$\% \ Change \ in \ 1^{st} \ RF = \frac{(1^{st} \ RF \ of \ Inv. \ Film) - (1^{st} \ RF \ of \ Comp. \ Film)}{(1^{st} \ RF \ of \ Comp. \ Film)} \ x \ 100\%$$

**Table 8**

| Film | 1st Stretch Draw Ratio (l/w) | Thickness (mm) | PS (%) | 50% Extension Stress Cycle 1 (MPa) | 50% Retraction Stress Cycle 1 (MPa) | 50% Extension Stress Cycle 2 (MPa) | 50% Retraction Stress Cycle 2 (MPa) | % Change in PS | % Change in RF (Cycle 1) |
|---|---|---|---|---|---|---|---|---|---|
| Comparative | 0 | 0.058 | 10.77 | 2.178 | 0.585 | 1.266 | 0.552 | | |
| Inventive | 4.96 | 0.045 | 8 | 2.108 | 0.562 | 1.281 | 0.537 | -25.7 | -3.9 |

The data in Table 8 illustrates that a % reduction in permanent set may occur for the stretch-modified inventive films as compared to the comparative film.

## Claims

1. A stretch-modified elastomeric multilayer film comprising:
a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 kg) from 0.1 g/10 min to 35 g/10 min, and has a crystallinity in the range of from at least 1 percent by weight to 40 percent by weight, and wherein the one or more additional core layer polymers comprise less than 30 wt.% of the core layer; and

   at least one outer layer independently comprising a second propylene/alpha-olefin copolymer and from 2.5 to 30 wt.% of an antiblock agent, wherein the second propylene/alpha-olefin copolymer has a melt flow rate (230°C/2.16 kg) from 0.1 g/10 min to 35 g/10 min, and has a crystallinity in the range of from at least 1 percent by weight to 40 percent by weight as measured via differential scanning calorimetry, and wherein the second propylene/alpha-olefin copolymer is a propylene/ethylene copolymer, wherein the propylene content is greater than 80 wt.% of the whole polymer and the ethylene content is from 8 to 20 wt.% of the whole polymer; wherein the crystallinity of the first propylene/alpha-olefin copolymer is equal to or greater than the crystallinity of the second propylene/alpha-olefin copolymer.

2. The film of claim 1, wherein the second propylene/alpha-olefin copolymer is a propylene/ethylene copolymer, wherein the propylene content is greater than 80 wt.% of the whole polymer and the ethylene content is from 8 to 18 wt.% of the whole polymer.

3. The film of claim 1, wherein the first propylene/alpha-olefin copolymer is different from the second propylene/alpha-olefin copolymer.

4. The film of claim 1, wherein the film further comprises a slip agent in the at least one outer layer, and optionally, in the core layer.

5. The film of claim 1, wherein the melt flow rate of the first propylene/alpha-olefin copolymer is different than the melt flow rate of the second propylene/alpha-olefin copolymer.

6. The film of claim 1, wherein the film is a blown film or a cast film.

7. The film of claim 1, wherein the film exhibits a reduction in permanent set as compared to an identical film that has not been stretch-modified.

8. A laminate comprising the stretch-modified elastomeric multilayer film of any one of the preceding claims.

9. The laminate of claim 8, further comprising at least one substrate laminated to a side of the film.

10. A process for manufacturing a stretch-modified elastomeric multilayer film, the process comprising:

   providing a multilayer film comprising:

      a core layer comprising a polymer blend of a first propylene/alpha-olefin copolymer and one or more additional core layer polymers, wherein the first propylene/alpha-olefin copolymer comprises at least 50 wt.% propylene, has a melt flow rate (230°C/2.16 kg) from 0.1 g/10 min to 35 g/10 min, and has a crystallinity in the range of from at least 1 percent by weight to 40 percent by weight, and wherein the one or more additional core layer polymers comprise less than 30 wt.% of the core layer; and
      at least one outer layer independently comprising a second propylene/alpha-olefin copolymer and from 2.5 to 30 wt.% of an antiblock agent, wherein the second propylene/alpha-olefin copolymer has a melt flow rate (230°C/2.16 kg) from 0.1 g/10 min to 35 g/10 min, and has a crystallinity in the range of from at least 1 percent by weight to 30 percent by weight as measured via differential scanning calorimetry, and wherein the second propylene/alpha-olefin copolymer is a propylene/ethylene copolymer, wherein the propylene content is greater than 80 wt.% of the whole polymer and the ethylene content is from 8 to 20 wt.% of the whole polymer;

wherein the crystallinity of the first propylene/alpha-olefin copolymer is equal to or greater than the crystallinity of the second propylene/alpha-olefin copolymer;

performing a first stretch of the film in at least one direction to an elongation of 100% or greater of its original length to form a stretch-modified multilayer film; and

substantially relaxing the stretch-modified multilayer film in the at least one direction.

11. The process of claim 9 10, wherein the second propylene/alpha-olefin copolymer is a propylene/ethylene copolymer, wherein the propylene content is greater than 80 wt.% of the whole polymer and the ethylene content is from 8 to 18 wt.% of the whole polymer.

12. The process of claim 10, wherein the process further comprises laminating the stretch-modified multilayer film to at least one substrate to form a laminate.

13. The process of claim 10, wherein the substrate is a nonwoven, preferably wherein the substrate is an elastic nonwoven, preferably wherein the elastic nonwoven has a corrugated shape.

14. The process of claim 12, wherein the laminate undergoes a second stretch in at least one direction to an elongation of 250% or less of its pre-second stretch length.

15. The process of claim 12, wherein the laminate does not undergo a second stretch.

**Patentansprüche**

1. Eine dehnungsmodifizierte, elastomere, mehrschichtige Folie, beinhaltend:

eine Kernschicht, die eine Polymermischung aus einem ersten Propylen-alpha-Olefin-Copolymer und einem oder mehreren zusätzlichen Kernschicht-Polymeren beinhaltet, wobei das erste Propylen-alpha-Olefin-Copolymer zu mindestens 50 Gew.-% Propylen beinhaltet, eine Schmelzflussrate (230 °C/2,16 kg) von 0,1 g/10 min bis 35 g/10 min aufweist und eine Kristallinität im Bereich von mindestens 1 Gewichtsprozent bis 40 Gewichtsprozent aufweist, und wobei das eine oder die mehreren zusätzlichen Kernschicht-Polymere zu weniger als 30 Gew.-% die Kernschicht beinhalten; und mindestens eine äußere Schicht, die unabhängig ein zweites Propylen-alpha-Olefin-Copolymer und zu 2,5 bis 30 Gew.-% ein Antiblockmittel beinhaltet, wobei das zweite Propylen-alpha-Olefin-Copolymer eine Schmelzflussrate (230 °C/2,16 kg) von 0,1 g/10 min bis 35 g/10 min aufweist und eine Kristallinität im Bereich von mindestens 1 Gewichtsprozent bis 40 Gewichtsprozent, wie mittels dynamischer Differenzkalorimetrie gemessen, aufweist und wobei das zweite Propylen-alpha-Olefin-Copolymer ein Propylen-Ethylen-Copolymer ist, wobei der Propylengehalt mehr als 80 Gew.-% des gesamten Polymers beträgt und der Ethylengehalt 8 bis 20 Gew.-% des gesamten Polymers beträgt; wobei die Kristallinität des ersten Propylen-alpha-Olefin-Copolymers gleich oder größer als die Kristallinität des zweiten Propylen-alpha-Olefin-Copolymers ist.

2. Folie gemäß Anspruch 1, wobei das zweite Propylen-alpha-Olefin-Copolymer ein Propylen-Ethylen-Copolymer ist, wobei der Propylengehalt mehr als 80 Gew.-% des gesamten Polymers beträgt und der Ethylengehalt 8 bis 18 Gew.-% des gesamten Polymers beträgt.

3. Folie gemäß Anspruch 1, wobei das erste Propylen-alpha-Olefin-Copolymer von dem zweiten Propylen-alpha-Olefin-Copolymer verschieden ist.

4. Folie gemäß Anspruch 1, wobei die Folie ferner ein Gleitmittel in der mindestens einen äußeren Schicht und wahlweise in der Kernschicht beinhaltet.

5. Folie gemäß Anspruch 1, wobei die Schmelzflussrate des ersten Propylen-alpha-Olefin-Copolymers von der Schmelzflussrate des zweiten Propylen-alpha-Olefin-Copolymers verschieden ist.

6. Folie gemäß Anspruch 1, wobei die Folie eine Blasfolie oder eine Gießfolie ist.

7. Folie gemäß Anspruch 1, wobei die Folie im Vergleich zu einer identischen Folie, die nicht dehnungsmodifiziert wurde, eine Verringerung der bleibenden Verformung zeigt.

8. Ein Laminat, das die dehnungsmodifizierte, elastomere, mehrschichtige Folie gemäß einem der vorhergehenden Ansprüche beinhaltet.

9. Laminat gemäß Anspruch 8, ferner beinhaltend mindestens ein Trägermaterial, das auf eine Seite der Folie laminiert ist.

10. Ein Verfahren zum Herstellen einer dehnungsmodifizierten, elastomeren, mehrschichtigen Folie, wobei das Verfahren Folgendes beinhaltet:

Bereitstellen einer mehrschichtigen Folie, die Folgendes beinhaltet:

eine Kernschicht, die eine Polymermischung aus einem ersten Propylen-alpha-Olefin-Copolymer und einem oder mehreren zusätzlichen Kernschicht-Polymeren beinhaltet, wobei das erste Propylen-alpha-Olefin-Copolymer zu mindestens 50 Gew.-% Propylen beinhaltet, eine Schmelzflussrate (230 °C/2,16 kg) von 0,1 g/10 min bis 35 g/10 min aufweist und eine Kristallinität im Bereich von mindestens 1 Gewichtsprozent bis 40 Gewichtsprozent aufweist, und wobei das eine oder die mehreren zusätzlichen Kernschicht-Polymere zu weniger als 30 Gew.-% die Kernschicht beinhalten; und
mindestens eine äußere Schicht, die unabhängig ein zweites Propylen-alpha-Olefin-Copolymer und zu 2,5 bis 30 Gew.-% ein Antiblockmittel beinhaltet, wobei das zweite Propylen-alpha-Olefin-Copolymer eine Schmelzflussrate (230 °C/2,16 kg) von 0,1 g/10 min bis 35 g/10 min aufweist und eine Kristallinität im Bereich von mindestens 1 Gewichtsprozent bis 30 Gewichtsprozent, wie mittels dynamischer Differenzkalorimetrie gemessen, aufweist und wobei das zweite Propylen-alpha-Olefin-Copolymer ein Propylen-Ethylen-Copolymer ist,
wobei der Propylengehalt mehr als 80 Gew.-% des gesamten Polymers beträgt und der Ethylengehalt 8 bis 20 Gew.-% des gesamten Polymers beträgt;
wobei die Kristallinität des ersten Propylen-alpha-Olefin-Copolymers gleich oder größer als die Kristallinität des zweiten Propylen-alpha-Olefin-Copolymers ist;

Durchführen einer ersten Dehnung der Folie in mindestens eine Richtung auf eine Verlängerung um 100 % oder mehr ihrer Originallänge, um eine dehnungsmodifizierte, mehrschichtige Folie zu bilden; und
wesentliches Entspannen der dehnungsmodifizierten, mehrschichtigen Folie in der mindestens einen Richtung.

11. Verfahren gemäß Anspruch 10, wobei das zweite Propylen-alpha-Olefin-Copolymer ein Propylen-Ethylen-Copolymer ist, wobei der Propylengehalt mehr als 80 Gew.-% des gesamten Polymers beträgt und der Ethylengehalt 8 bis 18 Gew.-% des gesamten Polymers beträgt.

12. Verfahren gemäß Anspruch 10, wobei das Verfahren ferner das Laminieren der dehnungsmodifizierten, mehrschichtigen Folie auf mindestens ein Trägermaterial beinhaltet, um ein Laminat zu bilden.

13. Verfahren gemäß Anspruch 10, wobei das Trägermaterial ein Textilverbundstoff ist, wobei vorzugsweise das Trägermaterial ein elastischer Textilverbundstoff ist, wobei vorzugsweise der elastische Textilverbundstoff eine gewellte Form aufweist.

14. Verfahren gemäß Anspruch 12, wobei das Laminat einer zweiten Dehnung in mindestens eine Richtung auf eine Verlängerung um 250 % oder weniger seiner Länge vor der zweiten Dehnung unterzogen wird.

15. Verfahren gemäß Anspruch 12, wobei das Laminat nicht einer zweiten Dehnung unterzogen wird.

**Revendications**

1. Un film multicouche élastomère modifié par étirage comprenant :

une couche de cœur comprenant un mélange homogène de polymères d'un premier copolymère de propylène/alpha-oléfine et un ou plusieurs polymères de couche de cœur supplémentaires, dans lequel le premier copolymère de propylène/alpha-oléfine comprend au moins 50 % en poids de propylène, a un indice de fluidité à l'état fondu (230 °C/2,16 kg) allant de 0,1 g/10 min à 35 g/10 min, et a une cristallinité comprise dans la gamme allant d'au moins 1 pour cent en poids à 40 pour cent en poids, et dans lequel les un ou plusieurs polymères de couche de cœur supplémentaires comprennent moins de 30 % en poids de la couche de cœur ; et

au moins une couche externe comprenant indépendamment un deuxième copolymère de propylène/alpha-oléfine et de 2,5 à 30 % en poids d'un agent antiadhérent, dans lequel le deuxième copolymère de propylène/alpha-oléfine a un indice de fluidité à l'état fondu (230 °C/2,16 kg) allant de 0,1 g/10 min à 35 g/10 min, et a une cristallinité comprise dans la gamme allant d'au moins 1 pour cent en poids à 40 pour cent en poids telle que mesurée par l'intermédiaire d'une calorimétrie différentielle à balayage, et dans lequel le deuxième copolymère de propylène/alpha-oléfine est un copolymère de propylène/éthylène, dans lequel la teneur en propylène est supérieure à 80 % en poids de l'ensemble du polymère et la teneur en éthylène va de 8 à 20 % en poids de l'ensemble du polymère ;

dans lequel la cristallinité du premier copolymère de propylène/alpha-oléfine est égale ou supérieure à la cristallinité du deuxième copolymère de propylène/alpha-oléfine.

**2.** Le film de la revendication 1, dans lequel le deuxième copolymère de propylène/alpha-oléfine est un copolymère de propylène/éthylène, dans lequel la teneur en propylène est supérieure à 80 % en poids de l'ensemble du polymère et la teneur en éthylène va de 8 à 18 % en poids de l'ensemble du polymère.

**3.** Le film de la revendication 1, dans lequel le premier copolymère de propylène/alpha-oléfine est différent du deuxième copolymère de propylène/alpha-oléfine.

**4.** Le film de la revendication 1, le film comprenant en outre un agent glissant dans l'au moins une couche externe, et facultativement, dans la couche de cœur.

**5.** Le film de la revendication 1, dans lequel l'indice de fluidité à l'état fondu du premier copolymère de propylène/alpha-oléfine est différent de l'indice de fluidité à l'état fondu du deuxième copolymère de propylène/alpha-oléfine.

**6.** Le film de la revendication 1, le film étant un film soufflé ou un film coulé.

**7.** Le film de la revendication 1, le film présentant une réduction de la déformation permanente en comparaison avec un film identique qui n'a pas été modifié par étirage.

**8.** Un stratifié comprenant le film multicouche élastomère modifié par étirage de l'une quelconque des revendications précédentes.

**9.** Le stratifié de la revendication 8, comprenant en outre au moins un substrat stratifié sur un côté du film.

**10.** Un procédé pour fabriquer un film multicouche élastomère modifié par étirage, le procédé comprenant :

le fait de fournir un film multicouche comprenant :

une couche de cœur comprenant un mélange homogène de polymères d'un premier copolymère de propylène/alpha-oléfine et un ou plusieurs polymères de couche de cœur supplémentaires, dans lequel le premier copolymère de propylène/alpha-oléfine comprend au moins 50 % en poids de propylène, a un indice de fluidité à l'état fondu (230 °C/2,16 kg) allant de 0,1 g/10 min à 35 g/10 min, et a une cristallinité comprise dans la gamme allant d'au moins 1 pour cent en poids à 30 pour cent en poids, et dans lequel les un ou plusieurs polymères de couche de cœur supplémentaires comprennent moins de 30 % en poids de la couche de cœur ; et

au moins une couche externe comprenant indépendamment un deuxième copolymère de propylène/alpha-oléfine et de 2,5 à 30 % en poids d'un agent antiadhérent, dans lequel le deuxième copolymère de propylène/alpha-oléfine a un indice de fluidité à l'état fondu (230 °C/2,16 kg) allant de 0,1 g/10 min à 35 g/10 min, et a une cristallinité comprise dans la gamme allant d'au moins 1 pour cent en poids à 30 pour cent en poids telle que mesurée par l'intermédiaire d'une calorimétrie différentielle à balayage, et dans lequel le deuxième copolymère de propylène/alpha-oléfine est un copolymère de propylène/éthylène, dans lequel la teneur en propylène est supérieure à 80 % en poids de l'ensemble du polymère et la teneur en éthylène va de 8 à 20 % en poids de l'ensemble du polymère ;

dans lequel la cristallinité du premier copolymère de propylène/alpha-oléfine est égale ou supérieure à la cristallinité du deuxième copolymère de propylène/alpha-oléfine ;

le fait d'effectuer un premier étirage du film dans au moins une direction jusqu'à un allongement de 100 % ou plus de sa longueur d'origine afin de former un film multicouche modifié par étirage ; et

le fait de détendre substantiellement le film multicouche modifié par étirage dans l'au moins une direction.

11. Le procédé de la revendication 10, dans lequel le deuxième copolymère de propylène/alpha-oléfine est un copolymère de propylène/éthylène, dans lequel la teneur en propylène est supérieure à 80 % en poids de l'ensemble du polymère et la teneur en éthylène va de 8 à 18 % en poids de l'ensemble du polymère.

12. Le procédé de la revendication 10, le procédé comprenant en outre la stratification du film multicouche modifié par étirage sur au moins un substrat afin de former un stratifié.

13. Le procédé de la revendication 10, dans lequel le substrat est un non-tissé, de préférence dans lequel le substrat est un non-tissé élastique, de préférence dans lequel le non-tissé élastique a une forme ondulée.

14. Le procédé de la revendication 12, dans lequel le stratifié subit un deuxième étirage dans au moins une direction jusqu'à un allongement de 250 % ou moins de sa longueur avant le deuxième étirage.

15. Le procédé de la revendication 12, dans lequel le stratifié ne subit pas de deuxième étirage.

FIG. 1

# FIG. 2

EP 3 197 677 B2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7498282 B
- US 6960635 B
- US 6525157 B
- US 5504172 A
- WO 0001745 A
- US 4540753 A, Cozewith, Ju and Ver Strate
- US 988999
- US 08082599 W
- US 7608668 B
- US 7741397 B
- US 4041203 A, Brock
- US 5169706 A, Collier
- US 5145727 A, Potts
- US 5178931 A, Perkins
- US 5188885 A, Timmons
- US 4720415 A
- US 5167897 A
- US 4107364 A
- US 4209463 A
- US 4525407 A
- US 4368565 A
- US 5143679 A
- US 5156793 A
- US 8337190 B
- US 20030088228 A
- US 20040222553 A
- US 4153751 A
- WO 2004020174 A
- US 20060003656 A
- WO 2003040201 A

**Non-patent literature cited in the description**

- **H. N. CHENG.** *MACROMOLECULES,* 1984, vol. 17, 1950-1955
- **VER STRATE.** *Macromolecules,* 1988, vol. 21, 3360-3371
- **ZWEIFEL HANS et al.** Plastics Additives Handbook. Hanser Gardner Publications, 2001, vol. 7, 585-600